# EUROPEAN PATENT APPLICATION

(11) **EP 2 223 738 A2**
(43) Date of publication of application: **01.09.2010**
(21) Application number: 10153382.6
(22) Date of filing: 11.02.2010
(51) Int. Cl.: B01D 65/02, G01F 1/688, B65D 51/16, B01D 61/22

(54) **Autonomous Filter Element**

(30) Priority: 13.02.2009 US 152329 P; 10.09.2009 US 241053 P
(71) Applicant: Millipore Corporation, Billerica, MA 01821 (US)
(72) Inventor: Burke, Aaron C/O Millipore Corp., 01821 Billerica, Massachusetts (US); DiLeo, Anthony C/O Millipore Corp., 01821 Billerica, Massachusetts (US); O'Brien, Timothy C/O Millipore Corp., 01821 Billerica, Massachusetts (US)
(74) Representative: UEXKÜLL & STOLBERG

(57) **Abstract**

An autonomous filter device and a method for improving the filter life and performance is disclosed. The filter element is equipped with one or more sensors, adapted to measure one or more characteristics or parameters of the fluid, such as temperature, pressure, or flow rate. In response to the measured characteristic or parameter, the control logic within the filter element is able to determine an appropriate response. For example, the control logic may determine that a sudden, but temporary, blockage has occurred in the filter membrane. In response to this, the control logic may initiate a specific response designed to alleviate the blockage. This response may be a temperature change, a vibration, a change in fluid flow path, or some other action. The control logic will then determine the success of the response, based monitoring any change in the fluid characteristics. Based thereon, the control logic may alert the operator that the filter element must be replaced. Alternatively, if the response was successful in correcting the blockage, the control logic need not notify the operator, as the filter element is back to normal operating operation.

## Description

This application claims priority of U.S. Provisional Patent Application Serial No. 61/152,329, filed February 13, 2009 and U.S. Provisional Patent Application Serial No.61/241,053, filed September 10, 2009, the disclosures of which are incorporated by reference in their entireties.

### BACKGROUND OF THE INVENTION

Filters are used in a multitude of applications, from removing crystals from wine, to removing impurities from drinking water and motor oil, to removing particulates from bioreactors, fermentors or other chemical processes.

Filters in each of these applications have issues associated with their use. In some cases, the issues may be specific to a particular application. For example, a number of containers, including but not limited to pharmaceutical containers, such as bioreactors and buffer tanks, require the ability to vent the internal gasses to the outside environment, or to take in fresh gas from outside the container. To do so and maintain sterility, it is common to include a sterile vent filter on the container. In some instances, excess gases, such as carbon dioxide or steam, produced during the reaction must be released from the container. In other instances, sparge or charge gasses, such as oxygen or air are intentionally added into the container.

One specific issue with these vent filters is maintaining an acceptable gas flow. A common problem is that the materials, typically water vapor, within the container can be subject to condensation since in most applications, gas temperature during operation is greater than ambient (i.e. 35°C typical for a bioreactor and 80°C for a WFI tank). If this material condenses on the vent filter, it will restrict the flow of gasses between the container and the outside environment by blocking the pores of the filter thereby reducing its effective surface area for gas transport.

Additionally, the natural foaming that occurs from biomanufacturing processes can accumulate on the filter and restrict air conduction. The foam is typically controlled in one of several ways. First, anti-foaming agent can be added to the container so that the surface tension is reduced and foam is not created. Alternatively, the container or filter housing may be designed to break bubble formation before it moves up to the filter membrane. Both of these approaches add complexity to the design of the vent filter and reaction process.

To counteract these phenomena, vent filters are typically made from hydrophobic membranes, which resist condensation within the filter pore structure. However, despite the use of hydrophobic membranes, it is known that condensation or plugging may still occur on the vent filter element. One possible solution to this problem is the use of external heating elements, which serve to elevate the temperature of the filter element, thereby reducing the condensation on the element.

These external heating elements are typically applied after the filter has been assembled, and can suffer from several failure modes. In some instances, the temperature sensor on the external heating element can fail, causing the filter to overheat, potentially compromising its integrity. In other instances, the sensor failure may lead to an inactive heater, which does not perform the desired function. In other instances, the heating element is only able to monitor the heat of the stainless steel housing around the filter element. Thus, changes in gas flow through the filter, which affect the filter's temperature, cannot be measured or detected by the external heating element. This can result in a lack of sufficient heat, or an overabundance, depending on the flow rate of the fluid in the filter.

Additionally, in large containers, the vent filter may be physically remote from the operator, such as on a different level of the building, and therefore, cannot be easily inspected by the operator. Thus, issues of integrity or flow rate may be ongoing for a period of time before they are detected using current implementations.

Other filter applications may have other unique issues. For example, tangential flow filters (TFF filters) may become clogged by the protein which it is filtering. Maintaining proper backpressure can help alleviate this problem.

In addition to application specific issues, there are issues that are generic for all filters. For example, the issue of integrity is common to all applications. A small breach in the filter membrane causes particulate to pass through the filter. Such a breach may be catastrophic depending on the application. For example, if the filter is used to insure a sterile interface or boundary, such a breach is unacceptable.

A second generic issue is that of reduced flow rate due to an excessive amount of particulate trapped against the filter membrane. This issue causes many filter vendors to suggest that filters be changed at regular intervals. For example, automotive oil filters should be changed at intervals determined by elapsed time or elapsed mileage. Similarly, water filters for refrigerators may have a life cycle measured in months of use or gallons of water filtered.

Today, most filters have two modes of operating. The first mode is normal operating mode. In this mode, the filter is operating normally, removing particulate as intended. In many embodiments, this is the default operation of the filter, and nothing is required to ensure that the filter remains in this mode. However, in some applications, it may be necessary to perform additional maintenance actions to insure that the filter remains in operating mode. For example, it may be necessary to heat the filter element to insure that the fluid being filtered remains in a particular state (such as liquid or gas), as described above in relation to the vent filter.

The second mode of operation also common to all filters is end of life. In this mode, the filter has exceeded its useful life. Such an event may occur due to an excessive buildup of particulate on the filter membrane. Typically, the ability of the filter element to pass fluid at an acceptable flow rate is compromised. In extreme cases, the fluid flow is completely stopped. Another failure that leads to end of life is an integrity breach. If the filter element is no longer integral, it cannot perform its function, and therefore has reached its end of life. Filters must be replaced upon reaching their end of life.

Although filters typically are only used in these two modes, there may be advantageous to have a third mode of operation, known as recovery mode. In this mode, the filter is not performing optimally, however, it has not actually reached its end of life. The performance may have degraded by a process condition outside the typical operating, such as when a large particulate blocks the membrane, or a large number of particulates arrive simultaneously. The filter membrane itself is not clogged yet, however, a large or unexpected amount of particulate has compromised the filter's ability to operate efficiently. In the case of the vent filter, this may occur accidently in a bioreactor when sparge gas surges spraying the protein foam on the filter membrane. In most filter applications, this mode is indistinguishable from end of life, and therefore is remedied in a similar fashion, typically by replacement of the filter.

An improved device and method that can more reliably monitor, detect and control these three modes of operation would be beneficial. Such a device and method can reduce cost, by maximizing the useful life of the filter element, and by minimizing the downtime associated with a filter replacement.

### SUMMARY OF THE INVENTION

The problems of the prior art are overcome by the present invention, which discloses an autonomous filter device and a method for improving the filter life and performance. The filter element is equipped with one or more sensors, adapted to measure one or more characteristics or parameters of the fluid, such as temperature, pressure, or flow rate. In response to the measured characteristic or parameter, the control logic within the filter element is able to determine an appropriate response. For example, the control logic may determine that a sudden, but temporary, blockage has occurred in the filter membrane. In response to this, the control logic may initiate a specific response designed to alleviate the blockage. This response may be a temperature change, a vibration, a change in fluid flow path, or some other action. The control logic will then determine the success of the response, based on monitoring any change in the fluid characteristics. Based thereon, the control logic may alert the operator that the filter element must be replaced. Alternatively, if the response was successful in correcting the blockage, the control logic need not notify the operator, as the filter element is back to normal operating operation. In other embodiments, the control logic also regulates the operating mode of the filter, such as by insuring that the fluid passing there through is at a predetermined temperature or pressure.

In other embodiments, the filter element works in conjunction with the surrounding support mechanism to provide the required functionality. For example, in certain embodiments, the filter may determine that particulates have reduced the flow rate. In response thereto, the filter may communicate to the associated support mechanism, which may alter the fluid flow through the filter.

### BRIEF DESCRIPTION OF THE DRAWINGS

Figure 1 shows a flowchart of the present invention;
Figure 2 illustrates a representative schematic of the present invention;
Figure 3 illustrates a container having a vent filter;
Figure 4 illustrates a vent filter of the present invention with an integrated heating element;

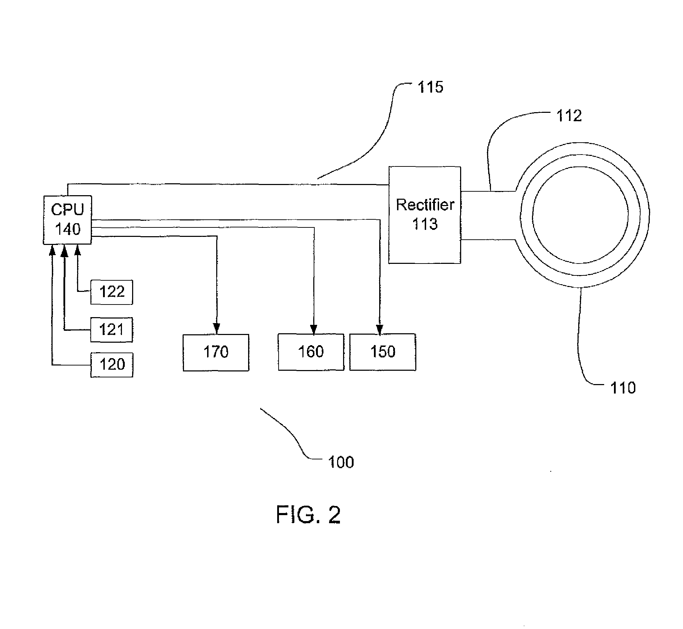

Figure 2 illustrates a representative schematic of one embodiment of the present invention;

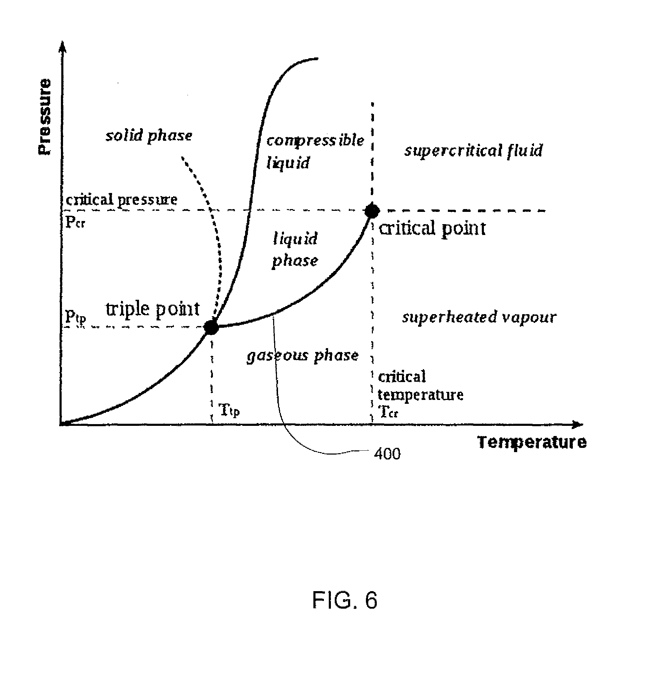

Figure 6 shows a phase diagram;

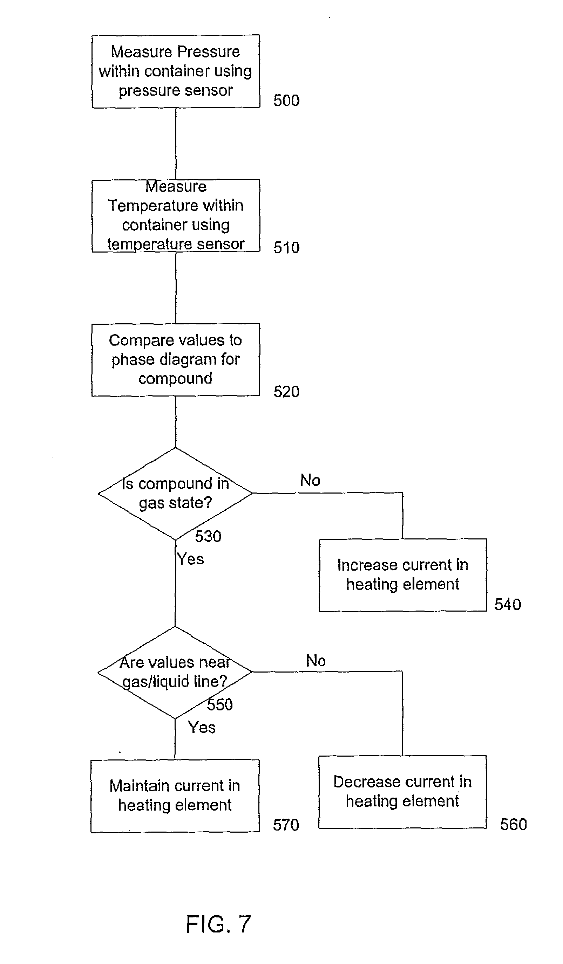

Figure 7 illustrates a representative flowchart that can be used by the processing unit during normal operating mode in one embodiment of the present invention;

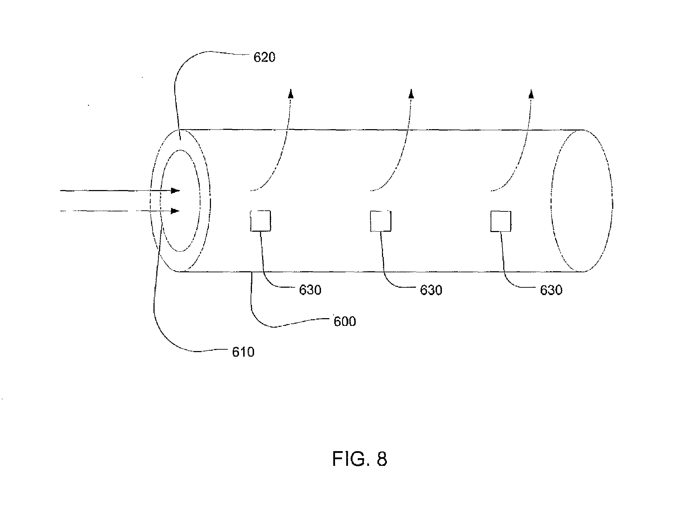

Figure 8 illustrates the operation of a plurality of flow sensors in a filtering element;

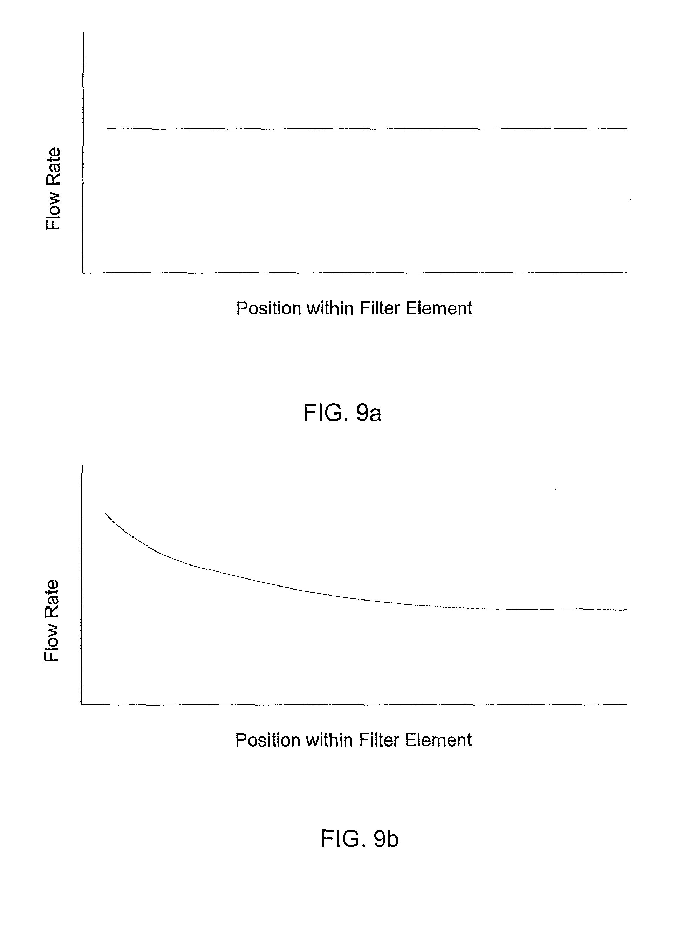

Figures 9a-9d show flow rate graph for various filter elements;

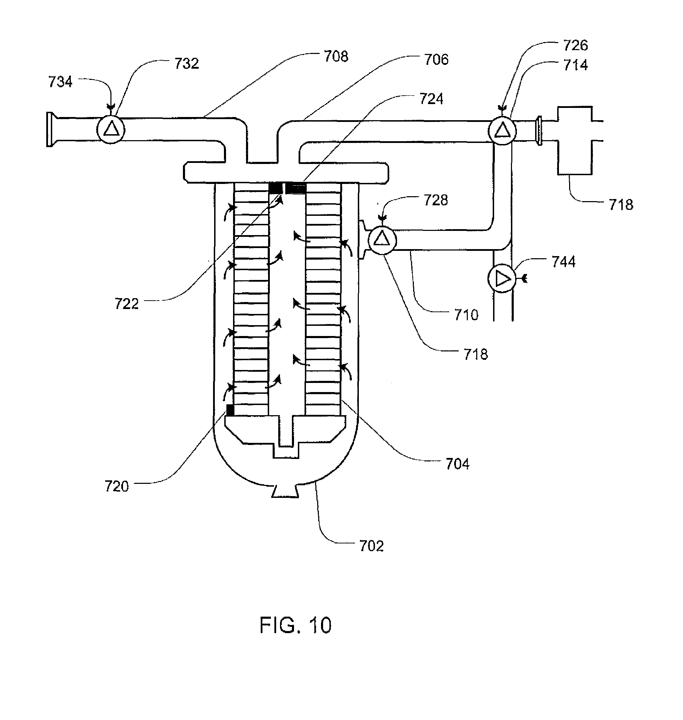

Figure 10 illustrates a filter in accordance with a second embodiment of the present invention;

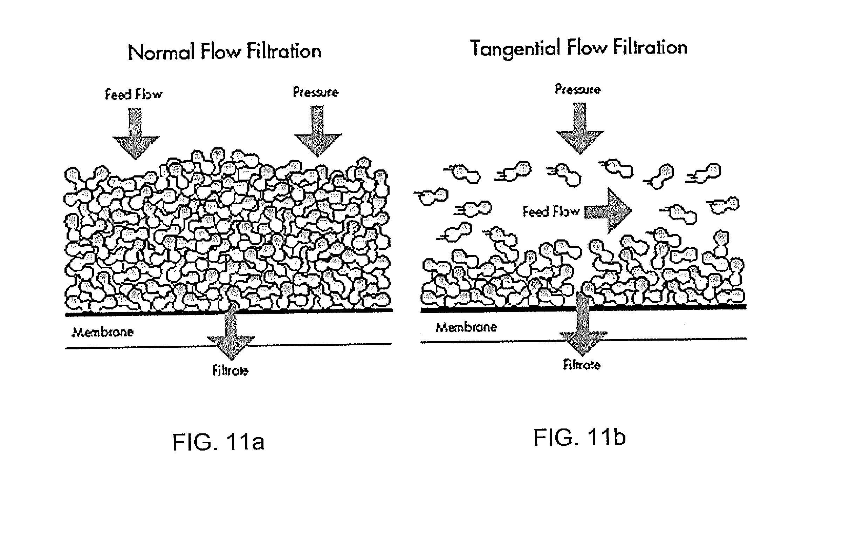

Figure 11 illustrates flow paths through various filter types;

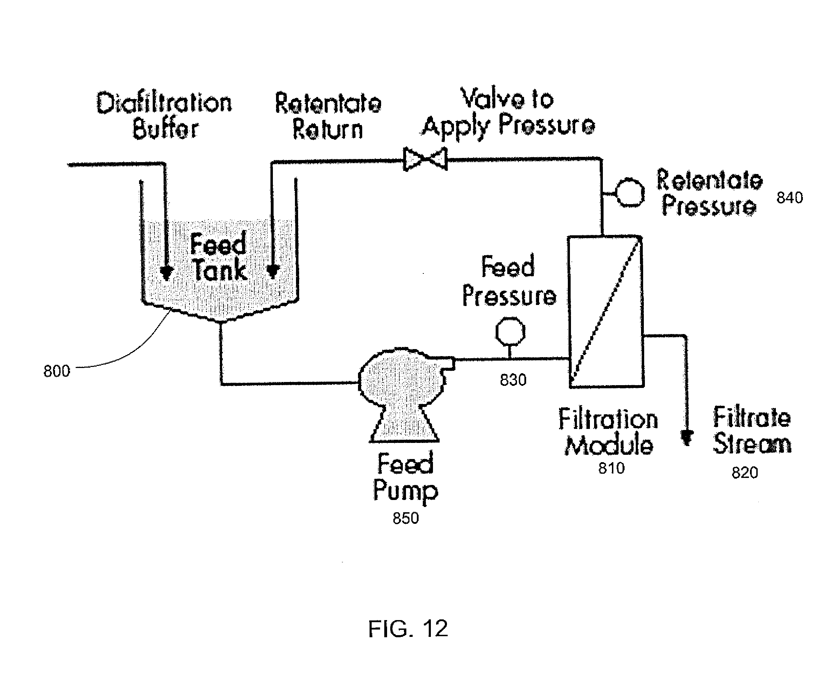

Figure 12 shows the flow path of a tangential flow filter (TFF);

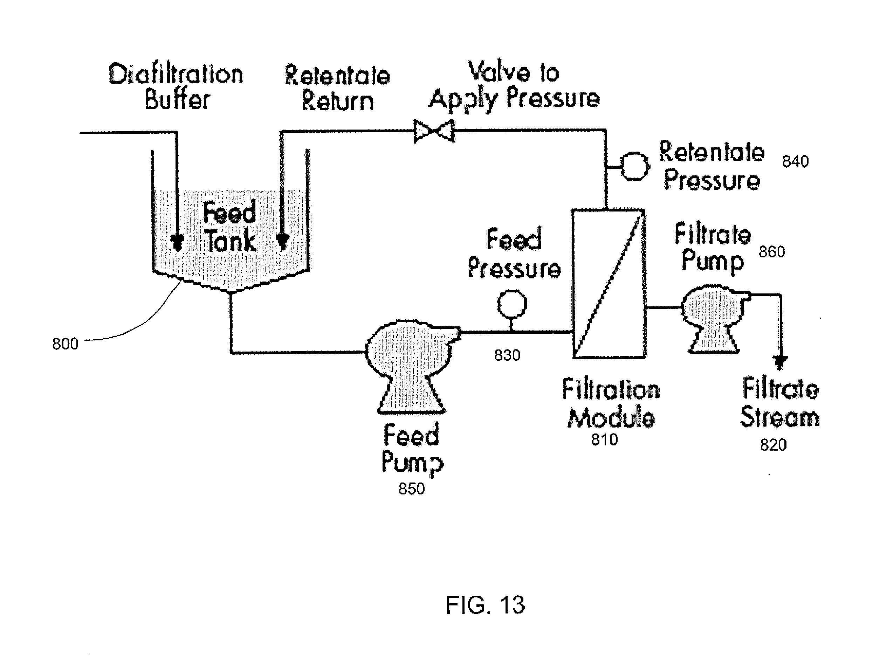

Figure 13 shows a second embodiment of the flow path of a TFF filter;

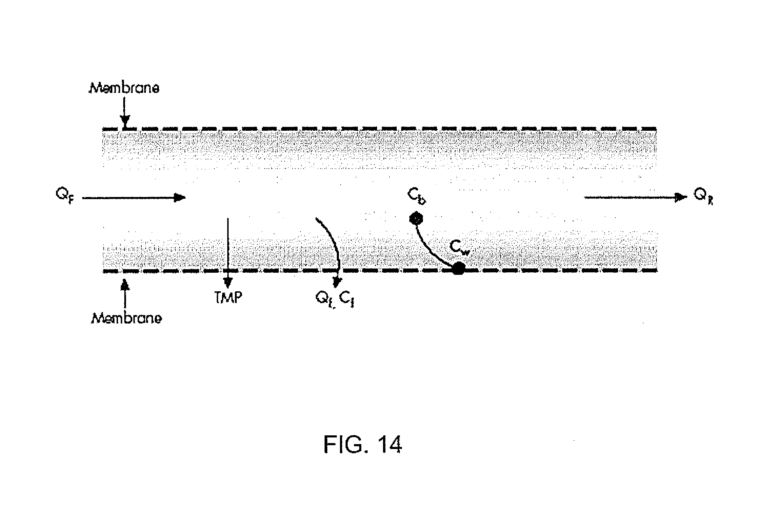

Figure 14 shows the forces acting upon a TFF filter; and

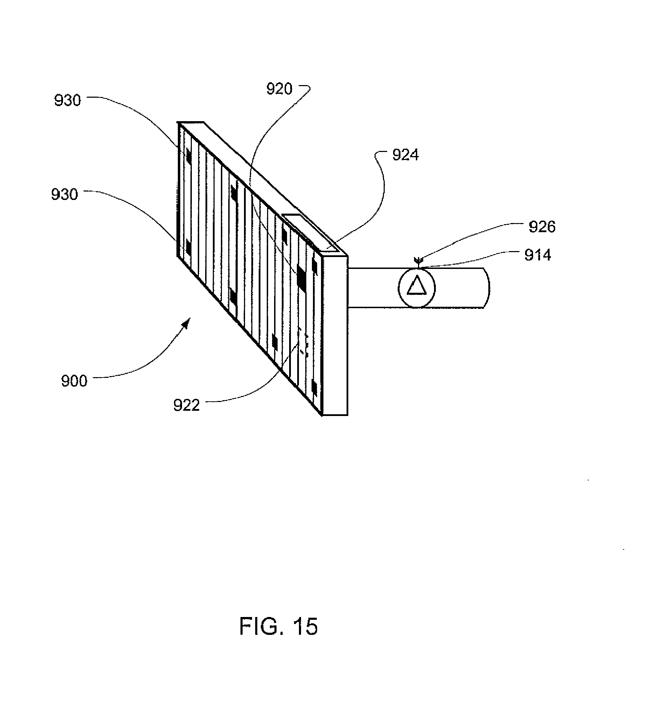

Figure 15 illustrates a TFF filter in accordance with an embodiment of the present invention.

### DETAILED DESCRIPTION OF THE INVENTION

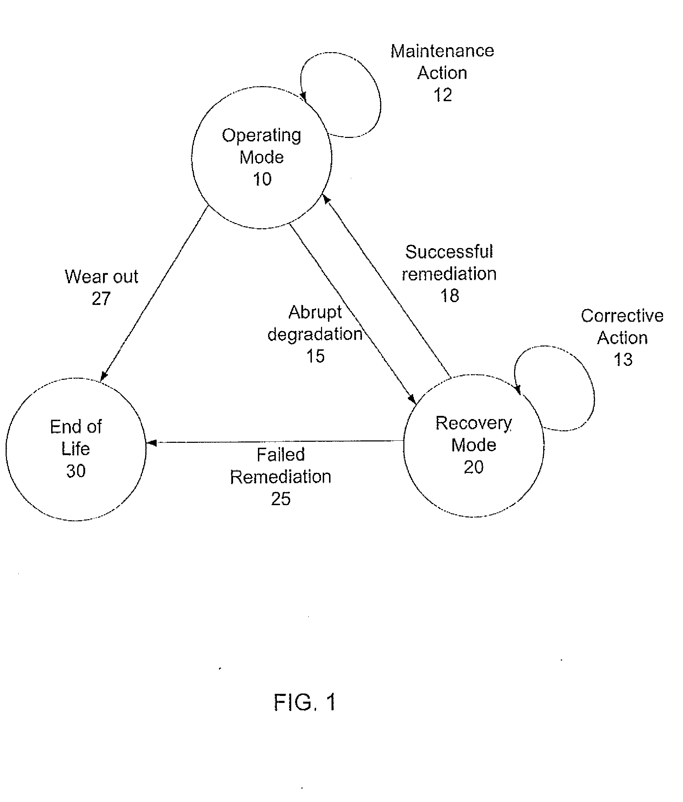

As described above, a filter element preferably has three modes of operation. These three modes are illustrated in Figure 1. The operating mode 10 is used during the majority of the filter's life. In most cases, no actions are required to insure that the filter remains in operating mode. However, in some embodiments, a maintenance action 12 may be performed, either continuous or periodically, to insure that the filter remains operational. Such an action may be a thermal cycle, vibration, pressure or fluid backflow or other remedial action.

After some amount of use, a measured parameter or characteristic of the filter, such as the flow rate of the filtered fluid, upstream and/or downstream pressure, or fluid temperature, may deviate from the acceptable ranges. If this event 27 occurs after an extended period of time, or as predicted by the manufacturer, the filter may simply have reached its end of life. In such a case, the mode of the filter changes from operating mode 10 to end of life mode 30, by way of natural wearout path 27.

Alternatively, the parameter may change suddenly, indicating that the filter has an integrity issue, and is no longer acting to filter particulate. Such an event also changes the mode of the filter from operating mode 10 to end of life 30 via path 27.

However, at times, a degradation event 15 may occur unexpectedly or instantaneously. In such a scenario, the event causes the filter to perform suboptimally, as may be determined by an abrupt change is one of the measured parameters or characteristics. A sudden change in the measured parameter would be inconsistent with typical wear out, and therefore may indicate an abnormal, perhaps temporary blockage has occurred. For example, a dramatic decrease in fluid flow rate may indicate that the filter has instantaneously become blocked. In such a scenario, the filter may move from operating mode 10 to recovery mode 20.

In recovery mode 20, the filter attempts to correct the blockage by actuating one or more corrective or remedial procedures. These procedures may include increasing temperature, changing fluid circulation paths, shaking the filter membrane, changing or reversing transmembrane pressure and others. This corrective action may be performed one time, and if the corrective action is successful in restoring the measured parameter or characteristic to an acceptable value, the filter transitions back to operating mode 100, via path 18.

In some embodiments, the corrective action may be performed a plurality of times, as shown in path 13. If after a predetermined number of corrective action attempts, the parameter has not returned to an acceptable value, the filter then transitions to end of life 30, via path 25.

Having defined a generic flowchart that demonstrates the modes of the filter of the present invention, a generic diagram of the structure of the filter will be described.

Figure 2 shows a representative schematic of the filter element 100 of the present invention. This filter element 100 contains control logic 140 to allow it to understand and transition between the modes described above. To provide this level of intelligence, a power supply must be provided. In certain embodiments, a battery or an electrical outlet is used to supply the required energy for the heating element. However, in other embodiments, the filter is self-contained and receives power wirelessly. In certain embodiments, a magnetic induction power coupling loop 110 is used in conjunction with a magnetic field to generate the required power source. In this way, the filter is not tethered to an external power supply, nor is there an active power source resident in the filter. Methods for attaching and integrating a magnetic field are described in co-pending application serial no. 12/079,396, which is hereby incorporated by reference.

In one embodiment, the magnetic induction power coupling loop 110 is used to create a voltage which is used by the sensors, actuators and by any associated circuitry within the filter. Any voltage variations needed to operate the filter element are performed by circuitry within the vent filter. In another embodiment, the magnetic field is modified so as to vary the voltage received by the power coupling loop 110.

In some embodiments, one or more sensors 120,121,122 are used to monitor at least one parameter or characteristic of the filter element. Coupling loop 110 is used to create an induced voltage from the external field. This voltage, which is an AC voltage 112, is then rectified and smoothed using a rectifier circuit 113 to create a DC voltage 115. This DC voltage 115 is then used to power any active circuitry, such as tuners, sensors, CPUs and the like.

A sensor 120 is used to monitor a parameter or characteristic of the filter element and relay this information back to a processing unit 140, such as a central processing unit (CPU). The processing unit 140 includes a storage device, such as a semiconductor memory, which is used to store instructions for the CPU and store various parameters and settings. The sensor 120 may be wired, or wireless, depending on its location within the filter. For example, if the sensor 120 is located in the housing near the control circuit, a wired or wireless configuration may be used. If however, the sensor 120 is located away from the control circuit, it may be advantageous to use a wireless sensor.

In one embodiment, the wireless sensor 120 is embedded in the end cap of the filter element 100. In other embodiments, the sensor 120 is affixed to, or embedded in, the filter element 100 at a different point, such as on the downstream side of the filter core element. In some applications, the temperature of the filter element may exceed 145°C, therefore a sensor capable of withstanding this temperature should be employed. Similarly, the temperature within the container 100 may cycle from lower temperatures to higher temperatures and back, therefore the sensor should be capable of withstanding this temperature cycling.

In one embodiment, a wireless transmitter is also located near, or integrated with, the sensor 120. In the preferred embodiment, the wireless transmitter and the sensor 120 are encapsulated in a single integrated component. Alternatively, the transmitter and the sensor 120 can be separated, and in communication with each other, such as via electrical signals. Various types of wireless communication devices are possible, including RFID, Zigbee, 802.11a/b/g, and other protocols.

The processor unit 140 compares the value measured by the sensor 120 to the desired or accepted value, or range of values, of the parameter or characteristic. The value returned by the sensor 120 may be an analog value, such as one proportional to the parameter measured, or may be a digital signal. Based on the value returned, the processor 140 determines whether the filter is still in operating mode, or whether it should transition to a different mode.

As shown in Figure 1, in some embodiments, a maintenance action 12 can be taken to enable the filter to remain in operating mode 10. This action may take many forms, including but not limited to temperature or backpressure modification. In these embodiments, the processing unit 140 controls actuator 150, which performs the required maintenance action.

If the measured parameter or characteristic, as seen by sensor 120, deviates from an accepted value or range, the CPU 140 may transition to recovery mode 20. In this mode, the filter actuates a corrective action 13, using actuator 160. This actuator may be the same actuator as the actuator used to implement the corrective action 13, or may be a different actuator. Suitable actions that may be employed include temperature or backpressure modification, circulation path modification, filter vibration, or other similar actions.

After the CPU has controlled actuator 160, it again checks the measured value returned by sensor 120. If the value has returned to a normal range, the CPU terminates the corrective action 13 and returns to operating mode 10. If the measured value is still unacceptable, the CPU 140 may opt to repeat the corrective action 13 one or more times. If the measured value returns to an acceptable range during this time, the CPU 140 returns to normal mode 10. If, however, the value remains unacceptable, the CPU 140 transitions to the end of life state 30.

In some embodiments, the filter 100 may employ more than one sensor 120. For example, the filter may have a temperature sensor 120, an upstream pressure sensor 121 and a downstream pressure sensor 122. In other embodiments, a different combination of sensors may be used. In these embodiments, the CPU 140 can use measured values from one or more of the sensors in determining what mode to enter and to determine the appropriate action. For example, the CPU 140 may use the output of several sensors (e.g. temperature and pressure) to control the maintenance action 12. However, it may use a single sensor (e.g. flow rate) to determine whether the corrective action was successful.

In some embodiments, an indicator 170 is used to alert the operator that the filter has reached end of life 30. This indicator 170 may be visual, auditory, tactile or some other means. Upon reaching end of life 30, the CPU 140 may actuate indicator 170.

In some embodiments, the actuator 150 and/or actuator 160 may not be physically located within the filter element 100. For example, in applications where changes in pressure or changes in circulation path are employed, the CPU 140 may control valves or other devices which are physically separate from the filter. This control can be via wired or wireless communication.

The state diagram and structure described above can be used in a number of different applications. Several of these applications will be discussed below. However, this list is not exhaustive and those of ordinary skill in the art will appreciate that other applications can also utilizes the teachings disclosed herein.

### EXAMPLE 1 - VENT FILTER

In a first embodiment, a vent filter is employed. In a first embodiment, the filter is used as a vent filter.

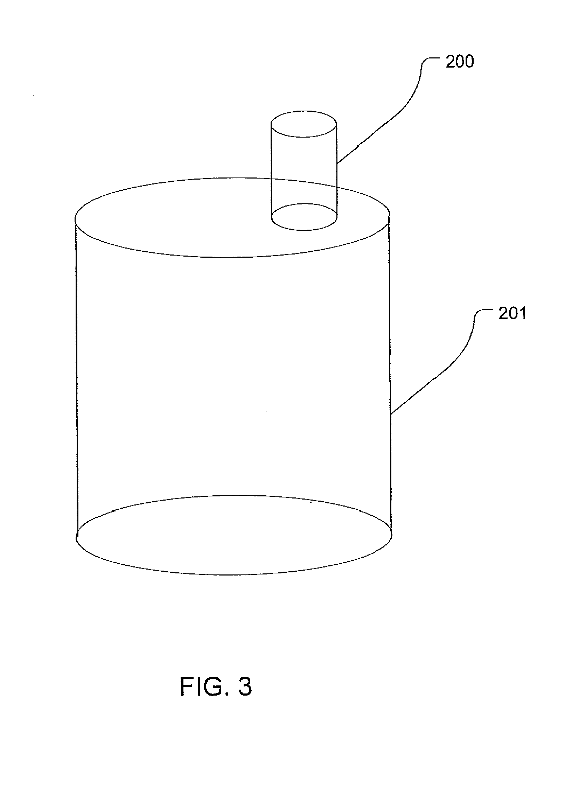

Figure 3 shows a container having such a vent. Typically, the container 201 is constructed from rigid materials, such as stainless steel and rigid plastic. In other embodiments, the container may be a flexible plastic material. To allow gasses to pass between the inside of the container 201 and the outside environment, typically a vent filter 200 is used. In the embodiment shown in Figure 3, the filter element 200 is located at the top surface of the container 201, so that it is separated from the material contained within the container 201.

Vent filtration systems are used not only for bioreactors, but also for growth media, buffer solution, WFI (Water For Injection) preparation systems and filling applications. These vent filters are sterilized using a suitable technique, such as autoclave, Steam-In-Place, gas sterilization, such as using ETO (ethylene oxide) gas, or gamma irradiation.

Vent filters are typically installed in one of two configurations. In the embodiment shown in Figure 3, a replaceable cartridge is installed within a stainless steel housing, and the entire assembly is affixed to the container. One such filter is an AERVENT® filter available from Millipore Corporation of Billerica, Massachusetts. A second common configuration is the use of a self-contained plastic capsule with its own plastic housing. One such filter is an OPTICAP® capsule filter with an AERVENT hydrophobic membrane available from Millipore Corporation of Billerica, Massachusetts.

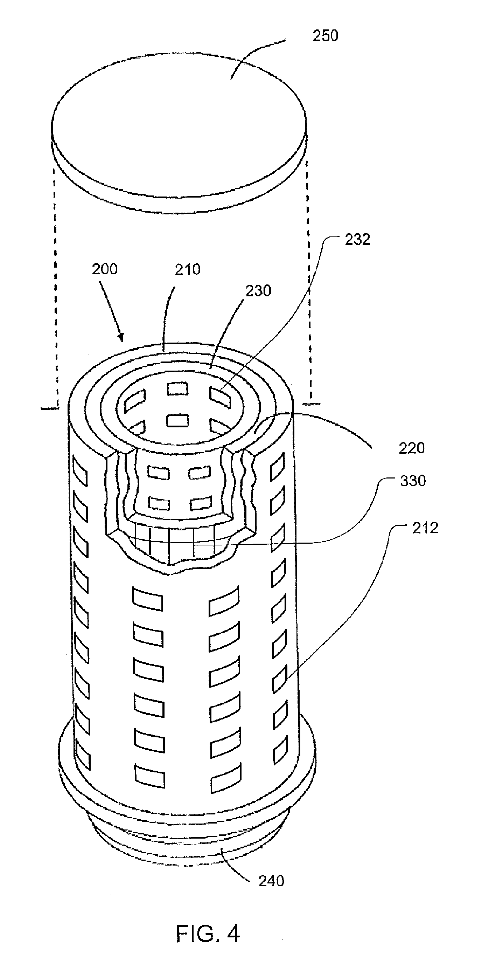

Figure 4 shows a vent filter having an integrated heating element. The vent filter 200 may be of any suitable type, such as but not limited to a disposable filter capsule or a replaceable filter cartridge. Vent filters typically have an outer porous plastic housing or sleeve 210, a membrane 220 and an inner core 230. The housing 210 and the inner core 230 are porous, preferably with a series of large openings (212 and 232 respectively) to allow fluid to move from the exterior of the filter through the housing 210 via its openings 212 through the membrane 220 and the openings of the porous core 230 to an outlet (not shown) which is connected to the core 230 and the base 240. A heating element is located within the vent filter 200, such as integrated into the plastic housing 210 or the inner core 230. In some embodiments, the membrane 220 is surrounded by a support layer (not shown). This support layer may be a more rigid porous membrane, a nonwoven or a mesh grid. In some embodiments, the heating element is placed in the support layer. The vent filter has a base 240, which attaches to the container. The vent filter 200 also has a closed top end 250.

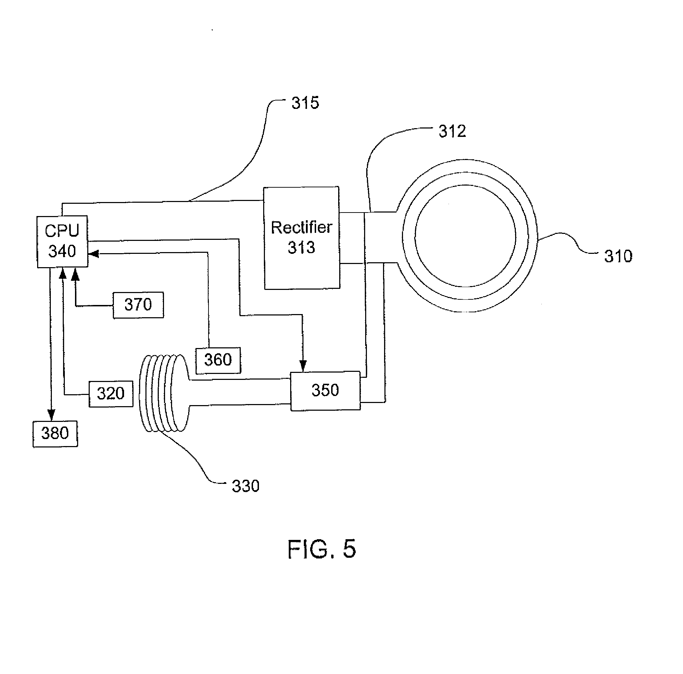

Figure 5 shows a representative schematic of the vent filter. In its simplest form, the heating elements 330 include a conductive wire, which is electrically isolated from its surrounding, connected to a power supply. The passage of current through the wire serves to heat the wire, thereby elevating the temperature of the surroundings. Modifications in the current passed through the wire serve to provide a mechanism to control the temperature. Thus, higher temperatures are achieved by passing more current through the wire. Alternatively, the current can remain fixed, while the duty cycle during which it is applied is varied. In other embodiments, a combination of current amount and time duration is used to regulate the temperature of the filter.

Further heating elements may be in the form of grids or meshes or porous mats that are electrically conductive and capable of generating the desired heating effect. They may be made of metal or other conductive materials such as carbon, graphite or carbon nanotubes.

To affect a change in temperature, a power supply must be provided. In certain embodiments, a battery or an electrical outlet is used to supply the required energy for the heating element. However, in other embodiments, the vent filter is self-contained and receives power wirelessly. In certain embodiments, a magnetic induction power coupling loop is used in conjunction with a magnetic field to generate the required power source. In this way, the vent filter is not tethered to an external power supply, nor is there an active power source resident in the filter. Methods for attaching and integrating a magnetic field are described in co-pending application serial no. 12/079,396, which is hereby incorporated by reference.

In one embodiment, the magnetic induction power coupling loop is used to create a voltage which is used by the heating element and by any associated circuitry within the filter. Any voltage variations needed to change the temperature of the heating element are performed by circuitry within the vent filter. In another embodiment, the magnetic field is modified so as to vary the voltage received by the power coupling loop.

In some embodiments, one or more temperature sensors are used to control and monitor the temperature of the heating element and its surrounds. Figure 5 shows a representative schematic of the circuitry required for an actively controlled vent filter. Coupling loop 310 is used to create an induced voltage from the external field. This voltage, which is an AC voltage 312, is then rectified and smoothed using a rectifier circuit 313 to create a DC voltage 315. This DC voltage 315 is then used to power any active circuitry, such as tuners, sensors, CPUs and the like.

A temperature sensor 320 is used to monitor the temperature of the heating element 330 and relay this information back to a processing unit 340, such as a central processing unit (CPU). The temperature sensor may be wired, or wireless, depending on its location within the vent filter. For example, if the sensor is located in the housing near the control circuit, a wired or wireless configuration may be used. If however, the temperature sensor is located away from the control circuit, it may be advantageous to use a wireless sensor.

Suitable sensors include a thermistor, which is a resistor with a high temperature coefficient of resistance, and a transducer, which is an integrated circuit. The sensor can also be of another type, including, but not limited to, a diode, a RTD (resistance temperature detector) or a thermocouple.

In one embodiment, the wireless temperature sensor 320 is embedded in the end cap of the filter element 300. In other embodiments, the temperature sensor is affixed to, or embedded in, the filter element at a different point, preferably on the downstream side. In some applications, the temperature of the filter element may exceed 145°C, therefore a sensor capable of monitoring this temperature should be employed. Similarly, the temperature within the container 100 may cycle from lower temperatures to higher temperatures and back, therefore the temperature sensor should have a response time sufficient to be able to measure temperature cycling.

In one embodiment, a wireless transmitter is also located near, or integrated with, the temperature sensor 320. In the preferred embodiment, the wireless transmitter and the temperature sensor 320 are encapsulated in a single integrated component. Alternatively, the transmitter and the sensor 320 can be separated, and in communication with each other, such as via electrical signals. Various types of wireless communication devices are possible, including RFID, Zigbee, 802.11a/b/g, and other protocols.

The processor unit 340 then compares the temperature value measured by the temperature sensor to the desired temperature and adjusts the current through the heating element 330 accordingly. The value returned by the temperature sensor may be an analog value, such as one proportional to the temperature detected, or may be a digital signal. The method used by the processing unit to make this adjustment can be any suitable means, including but not limited to PID control, proportional control or any other method.

The processing unit 340 varies the current through the use of current control circuit 350. This circuit 350 controls the amount of current passing through the heating element 330, using conventional means. In some embodiments, the control circuit 350 varies the duty cycle of the current passing through heating element 330. In other embodiments, the circuit 350 varies the magnitude of the current passing through the heating element 330.

In some embodiments, a second temperature sensor 360 is used as a fault tolerant device, such as a thermal relay or switch, to insure that the vent filter does not overheat in the case of a failure of the first sensor 320.

Preferably these temperature sensors are placed in proximity to the heating element 330 so as to accurately report the temperature of the filter elements.

In another embodiment, the circuitry within the vent filter is very simplistic, comprising only of a wireless temperature sensor and an induction coil. In this embodiment, the control of the voltage is performed external to the filter and the magnetic field is adjusted to change the current through the heating element. This embodiment requires less electronics within the filter, but requires additional external logic and control.

As described above, external heaters simply supply a constant amount of heat to the filter elements, as they cannot detect the internal conditions of the filter. In one embodiment, the heating circuit of Figure 3 is utilized with an intelligent processing unit. For example, a pressure sensor 370 may be added to the filter element, adapted to measure the pressure within the container.

As was described with respect to the temperature sensor, the pressure sensor may be wired or wireless. This sensor 370 is capable of generating an output, which varies as a function of the pressure of the surrounding environment. In another embodiment, the sensor 370 is a differential sensor, whereby its output is a function of the difference is pressure between two areas. This output can be in the form of an analog voltage or current, or can be a digital value or pulse. In the preferred embodiment, the output varies linearly with the pressure, however this is not a requirement. Any output having a known relationship, such as logarithmic or exponential, to the surrounding pressure, can be employed. In such a situation, a transformation of the output can be performed to determine the actual measured pressure.

In some applications, the temperature of the filter element may exceed 145°C, therefore a sensor that is stable at these temperatures should be employed. Similarly, a transmitter capable of withstanding this temperature should be employed. Finally, the temperature with the container 100 may cycle from lower temperatures to higher temperatures and back, therefore the pressure sensor should be able to withstand temperature cycling.

There are multiple embodiments of this pressure sensor 370. For example, this sensor can be constructed using micro-electro-mechanical system (MEMS) technology, a piezoelectric element, a conductive or resistive polymer, including elastomers and inks, or a transducer. These examples are intended to be illustrative of some of the types of sensors that can be used; this is not intended to be an exhaustive list of all such suitable pressure sensors. Additionally, these sensors can be made using Silicon on Insulator (SOI) technology, as described in copending application 12/502,259.

In addition, an alert mechanism 380 may be in communication with the processing unit 340. This enables the filter element to alert the operator that it has determined that the filter has reached its end of life and is in need to replacement.

This filter can be used in the manner described in Figure 1. In operating mode, the vent filter must insure that the fluid being filtered remains in gas phase. Figure 6 shows a traditional phase diagram. By monitoring temperature and/or pressure, the CPU in the vent can determine phase that the fluid is in. By varying the current being passed through the heating elements, the CPU can insure this gaseous phase is maintained.

Thus, in this embodiment, there is a maintenance action 12 (as shown in Figure 1).

Figure 7 shows a representative flowchart of the control loop required to regulate the current flowing through the heating element during operating mode. First, the processing unit queries the pressure sensor to determine the pressure within the container, as shown in Box 500. The processing unit then queries the temperature sensor to determine the temperature within the container, as shown in Box 510. The processing unit then compares this set of values to the phase diagram for the given material. In some embodiments, an equation is stored within the storage element of the processing unit which represents the gas/liquid line 400. In other embodiments, a set of points whose coordinates correspond to the gas/liquid line 400 are stored in the storage element of the processing unit. The processing unit compares the actual readings to those stored in the storage element. Based on this comparison, the processing unit can determine whether the operating conditions are such that the material is in its gaseous state. If not, the processing unit increases the current in the heating element to raise the temperature, as shown in Box 540. In a further embodiment, if the material is in its gaseous state, the processing unit compares the values to the gas/liquid line 400. If the values produce a point that is close to the line 400, then a proper amount of heat is being used to maintain the environment, as shown in Box 570. However, if the point is far from the line 400, this implies that the temperature may be reduced without fear of condensation. In this case, the current in the heating element is reduced, as shown in Box 560.

The flowchart of Figure 7 is executed repeatedly, so as to maintain the heating element at a proper temperature. The adjustments to the current may be based on any control algorithm. For example, a proportional algorithm, a P-I algorithm (proportional-integral), a P-D (proportional-derivative) or a P-I-D algorithm (proportional-integral-derivative) algorithm may be used to determine the current adjustment. Other algorithms are also known and within the scope of the invention.

The CPU continues executing this flowchart as long as the measured parameters stay within acceptable ranges. The filter begins in operating mode 10. By reading the pressure sensor 370 and the temperature sensor 320, the processing unit can determine the phase that the potentially clogging material is in, as shown in Figure 6. The goal of the control system is to insure that the material remains in gaseous form. Thus, it continuously monitors the pressure and temperature within the container, and adjusts the current being passed through the heating elements to insure that this condition is met.

The use of such an algorithm allows flexibility in the placement of the container. In other words, the present system can adapt to different operating conditions (cold, warm or hot temperatures), and heat the filter accordingly and efficiently.

In a further embodiment, flow rate detectors are incorporated in the vent filter. Figure 8 illustrates a filter 600, where the flow of material is indicated by the arrows. The fluid enters the core 610, passes through the membrane 620 and exits to the exterior of the filter. In some embodiments, the heater elements are placed in or proximate to the membrane 620, such as in the core, housing or support layer. A temperature sensor (not shown) is placed within the core, to measure the temperature of the fluid prior to its passage through the membrane. A corresponding mated temperature sensor 630 is placed on the exterior of the filter, to measure the temperature of the fluid after it has passed through the membrane 620 and the co-located heating element. As explained above, the temperature difference observed by these two sensors allows the flow rate at that point to be measured. In the embodiment shown in Figure 8, three flow rate sensors are shown, where each is adapted to measure the flow rate at a different section of the filter element.

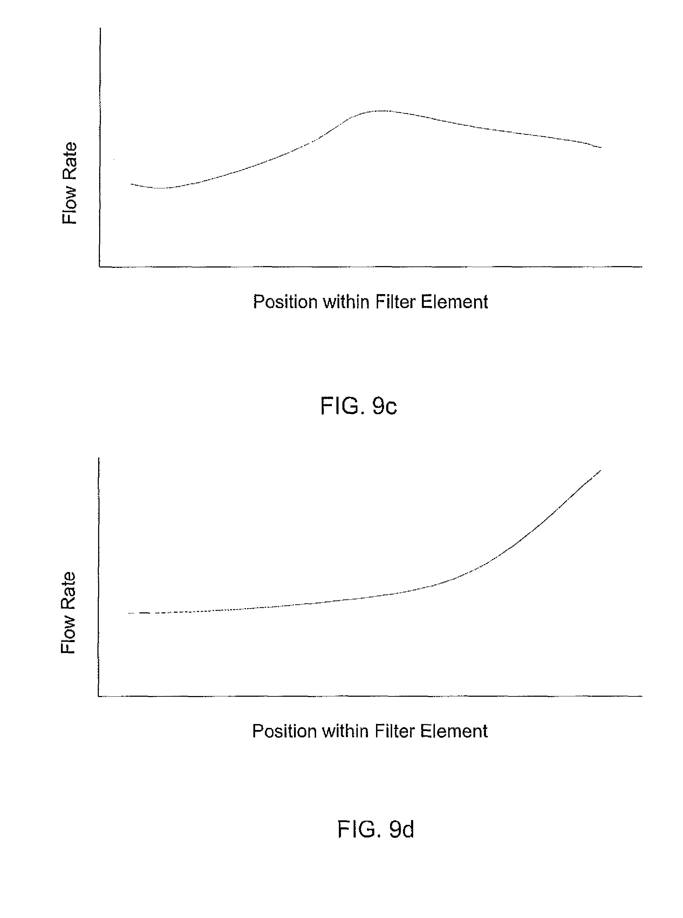

Figures 9a-9d show graphs illustrating exemplary flow rates observed by the three sensors for a filter as it becomes clogged over its life cycle. When a new filter is installed, all portions of the membrane are equally permeable. At this point in time, flow rates may be roughly equal at all portions of the filter, as shown in Figure 9a. Alternatively, a higher flow rate may be seen at the leftmost sensor, as this sensor is the one closest to the source, and fluid may exit through this sensor since it is the path of least resistance and shortest distance. This is illustrated in Figure 9b. As the filtering element is used, splatter or foam from the material begins to coat the filter, typically beginning near the inlet of the filter. Thus, the flow rate as seen by the leftmost sensor is reduced, forcing an increase in flow at the other locations, as shown in Figure 9c. As the filter continues to clog, the flow rate at the middle sensor also begins to decrease, forcing more of the flow through the rightmost part of the filter, as shown in Figure 9d.

Such a configuration is valuable in that absolute flow rate values are unnecessary. Rather, the relative values of the various sensors over time are sufficient to understand the current permeability and condition of the filter. For example, the actual flow rate values are not included on Figures 9a-9d. However, the general shape of the graph, and the relationship between the flows at the various points allows one of ordinary skill in the art to understand the status of the membrane and determine whether replacement is required.

In other embodiment, a simple hot-wire anemometer can be used. In this embodiment, a thin wire is placed in the flow of the fluid. This wire is then energized by passing a current through it, thereby heating the wire. The fluid flow past the wire has the effect of removing heat as it is being generated by the wire, thereby cooling the wire. Thus, the greater the fluid flow, the lower the temperature of the wire. Variations in the temperature of the wire cause similar variations in the resistance of the wire. Thus, flow rate can be determined by measuring the resistance of the wire. In certain embodiments, known as constant current anemometers (CCAs), a constant current is passed through the wire, and the voltage across the wire is measure to determine its resistance. In other embodiments, known as constant voltage anemometers (CVAs), a constant voltage is maintained across the wire, and the current is measured. In either scenario, the resistance of the wire can be determined, and consequently, the fluid flow can be calculated.

Thus, flow rate can be used to determine if a filter is becoming clogged. In other words, referring to Figure 1, if the flow rate gradually decreases, this may be an indication of wear out. Such an event would lead the CPU 340 to transition to the end of life mode 30.

While the flow rate sensor is useful in determining clogging within a filter, it can also be used to determine filter integrity. For example, if the flow rate as determined by one of the sensors undergoes a substantial increase, an integrity issue may exist. A sudden increase in flow rate measured at one or more of the sensors may indicate that the filter membrane has broken, thereby increasing the flow instantaneously. Thus, increases in flow rate can cause the CPU to transition to end of life mode 30. Integrity issues can also be detected through the use of pressure sensors. As is known to those of ordinary skill, the differential pressure between two points can be used to determine the flow rate of fluid passing between those points. These pressure sensors can be connected to a processing unit such that the processor can monitor the differential pressure across the thickness of the membrane for signs of integrity issues.

However, clogging is not the only concern. In certain situations, a temporary blockage may occur. In some environments, such as a fermentation reactor, a material or byproduct of the reaction, such as the protein foam, may accumulate on the top surface and be pushed upward. When it reaches the surface, the foam may burst as it contacts a surface and splash as the gas is released. At times, this material may splash onto the filter element, causing it to clog. In some embodiments, this blockage is not permanent, and may be rectified by the application of sufficient heat so as to vaporize the splashed material. In such a scenario, the processing unit 340 may detect a sudden change in the flow through a particular portion of the filter. Based on this, the processing unit may regard this as an abrupt degradation in a measured parameter, as shown in Figure 1. The CPU 340 then moves to the recovery mode 20, where a corrective action will be attempted. In this embodiment, the CPU 340 may apply a significant amount of current to the heating element, assuming that this change is due to a splash. The processing unit will then continue to monitor the flow rate through this portion of the filter. If the flow rate improves, then the assumption was correct, and the processing unit will return to the operating mode 10.

However, if the flow rate does not improve to a specific value within a predetermined time period, the processing unit may determine that the filter is sufficiently clogged such that heat alone cannot be used to remedy the situation. In such a scenario, the processing unit may transition to the end of life mode 30, and notify an operator through use of an alert 380.

In an alternative embodiment, the abrupt degradation 15 may be detected using a pressure sensor to detect a sudden increase in pressure within the container. This increase may correspond to a temporary blockage as described above. Upon detecting such a pressure change, the steps described above can be executed to attempt to vaporize the material from the filter element. If the situation is not rectified, the processing unit may notify an operator through use of an alert.

In accordance with the embodiment shown in Figure 5, the processor may be in communication with a number of different types of sensors. As previously described, temperature sensors can be used to maintain a predetermined temperature for the filter element, and for calculating flow rate. Pressure sensors can be used for flow rate or for integrity testing. Other types of sensors can also be employed. For example, in a bioreactor, it may be known that a subcompound of the reaction has a deleterious effect on the hydrophobicity of filter membrane by changing the surface energy. To counter this, the level of material within the bioreactor is kept sufficiently low so as not reach the vent filter. However, excessive foaming or splashing may cause material to reach the vent filter. A conductivity sensor, in conjunction with a processing unit, can be used to predict this condition and prepare for the pending contact.

### EXAMPLE 2 - PARTICULATE FILTER

In another embodiment, a filtration system for particulates, such as cell debris from a bioreactor or crystals from wine, may employ the technology described above.

A filtration system for particulates such as cell debris from a bioreactor or crystals from wine is shown in Figure 10. It consists of housing 702 containing one or more filters 704. The filter 704 is attached to the outlet 706 of the housing such that all filtrate reaching the outlet 706 does so by having first passed through the filter 704. The housing 702 also has an inlet 708 from a source of the fluid to be filtered. Downstream of the outlet 706 is a recirculation loop 710 which is connected via a first electronically actuated valve 714, such as a solenoid valve, to the outlet 706 and to the side of the housing 702 via a second electronically controlled valve 718. In the normal closed position, filtrate leaving the outlet 706 is passed downstream to the next location 718 such as a storage container or an additional purification step. Inlet 708 also has an electronically controlled valve 732 mounted adjacent the housing 702.

The filter 704 has a first sensor 720 mounted on the upstream side of the filter material and a second sensor 722 mounted downstream of the filter material. Both sensors 720, 722 may contain a wireless communication device such as a RFID tag. An additional computational logic device such as a PID controller or CPU 724 is in communication with the two sensors 720, 722. This CPU 724 can compare and contrast the signals from the two sensors 720, 722 against a known set of parameters. The processing unit 724 also is capable of controlling valves 714 and 718 such as via a wireless communications device 726, 728, 734 contained in each of the valves 714, 718 and 732, respectively or via wired communication. The wireless communication device may be any suitable type, including but not limited to an RFID device, and a Zigbee device. The CPU 724 is able to actuate or deactuate the valves 714, 718, 732 as needed. The sensors 720, 722 and the processing unit 724 may be powered remotely such as by an inductive coupling device in the outlet of the housing 702. The wireless communications devices 726, 728, 734 of the valves 714, 718 and 732 and the valves themselves 714, 718 and 732 may be powered by a hard wire electric connection to the system power supply (not shown).

Unfiltered wine containing crystals to be removed is passed from the inlet 708 into the housing 702 and through the filter (such as a PolySep® II filter available from Millipore Corporation) to the outlet 706 of the system. The first and second sensors 720, 722 are monitored by the processing unit 724 at an interval, such as every 2 minutes. In this embodiment, no maintenance action is required to retain the filter in operating mode 10.

However, when the pressure value between the two sensors 720, 722 is found to differ by more than a predetermined amount, such as two (2) psig, the processing unit7824 initiates a corrective action. The processing unit 724 sends a signal to cause the valves 712 and 718 to open and valve 732 to close. In this embodiment, the actuators shown in Figure 2 are actually outside of the filter element, however they are controlled by the processing unit within the filter element. However, another embodiment collocates the actuators and valves within the filter housing thereby improving the response time and sensitivity of the measurements and corrective actions.

This corrective action diverts the filtrate from the outlet 706 back into the housing 702 via the recirculation loop 710 at a point adjacent to the outside of the filter 704 where valve 718 is located. This causes any sediment built up to be dislodged from the outer surfaces of the filter 704. This flushing may occur for a fixed amount of time, such as 30 seconds. After the predetermined time period has elapsed, the processing unit 724 then commands valves 712 and 718 to close and valve 732 to open. Valve 744 is then opened to drain the loop 710. Processing unit 724 then compares and contrasts the signals from the two sensors 720, 722 against a known set of parameters upon reactivation of the system to its forward flow/filtration sequence.

In the event that the flushing does not improve the filtration (via maintaining the pressure differential within the prescribed differential), the processing unit 724 may try the corrective action (e.g. flushing) a second time and again measure and compare the pressure differential against the set standard.

If the difference still does not fall within the prescribed range, the processing unit then moves to end of life mode 30, where an alarm (not shown) is set off, indicating to the operator that the filter needs to be replaced.

If the flushing restores the differential pressure to an acceptable value, the processing unit 724 returns to operating mode 10, where it simply continues to monitor the differential pressure between sensors 720, 722.

In a different embodiment of this example, the pressure sensors 720, 722 are replaced by flow rate sensors. The processing unit 724 now monitors the flow rate through the filter in order to make its determinations about mode changes and corrective actions. With this exception, the system functions equivalent to that described above. In yet another embodiment, a single flow rate sensor is placed on the downstream side of the filter, and is monitored by the processing unit 724. Rather than measure differential flow rates, the processing unit 724 simply monitors absolute flow rate through the filter.

### EXAMPLE 3 - TFF Filters

Tangential Flow Filters (TFF) are commonly used to separate proteins from a filtrate. Since the proteins may clog the membrane, the fluid flows past the membrane in a tangential direction. Figure 11a shows the flow of a traditional filter, wherein the fluid flows toward, or normal to, the surface of the membrane. Figure 11b illustrates the operation of a TFF filter, where the fluid flow is tangential to the surface of the membrane. This allows few particles to gather on the membrane, thereby reducing the incidence of clogging.

Figure 12 shows a traditional concentration TFF system. Fluid from a feed tank 800 is pumped in a circuitous path into a TFF filter 810 and back to the feed tank 800. The TFF filter 810 filters filtrate from the fluid, which exits the system via filtrate stream 820. As this process continues, the concentration of retentate increases. During each pass of fluid over the surface of the filter membrane, the applied pressure forces a portion of the fluid through the membrane and into the filtrate stream 920. The result is a gradient in the feedstock concentration from the bulk conditions at the center of the channel to the more concentrated wall conditions at the membrane surface. There is also a concentration gradient along the length of the feed channel from the inlet to the outlet (retentate) as progressively more fluid passes to the filtrate side.

Figure 14 illustrates the flows and forces described above with the parameters defined as:
Q_{F} : feed flow rate [L/h]
Q_{R} : retentate flow rate [L/h]
Q_{f} : filtrate flow rate [L/h]
C_{b} : component concentration in the bulk solution [g/L]
C_{w} : component concentration at membrane surface [g/L]
Cf : component concentration in filtrate stream [g/L]
TMP: applied pressure across the membrane [bar]

Transmembrane pressure (TMP) is defined as the pressure differential across the TFF membrane. Referring to Figure 12, it is the average pressure on the fluid side, typically defined as the average of the feed pressure 830 and the retentate pressure 840, less the pressure on the filtrate side.

It is known that maintaining a TMP within a certain range improves the operation and performance of the TFF filter. Often, very high wall concentrations and high membrane fouling occur, especially during the startup of the process. To reduce the filtrate rate and enable the TMP to be controlled at the low values required for robust TFF operations the filtrate flow must be controlled.

In a controlled flow filtrate operation, a pump or valve 860 on the filtrate line restricts filtrate flow to a set value, as shown in Figure 13. In addition to reducing the filtrate flow to maintain adequate tangential flow, it creates pressure in the filtrate line to reduce the TMP while the feed and retentate pressures remain fixed.

By monitoring the feed pressure and the retentate pressure, it is possible to determine the optimal pressure on the filtrate side of the filter. The filtrate pump or valve 860 is then adjusted to achieve this pressure.

Having defined the typical operation of a TFF filter, the use of an autonomous TFF filter will now be described.

As shown in Figure 15, the filter 900 has a first sensor 920 mounted on the upstream side of the filter membrane and a second sensor 922 mounted downstream of the filter membrane. Both sensors may be proximate to the relative side of the filter and do not necessarily have to be and preferably are not in contact with the membrane itself, so as to obscure the filtration function. For example they may be located in the feed and filtrate channels adjacent the respective side of the filter. They may also be mounted on an inner wall of either channel and the like. Both sensors 920, 922 may contain a wireless communication device such as a RFID tag. An additional computational logic device such as a PID controller or CPU 924 is in communication with the two sensors 920, 922. This CPU 924 can compare and contrast the signals from the two sensors 920, 922 against a known set of parameters. The processing unit 924 also is capable of controlling valves or pump 914 such as via a wireless communications device 926 contained in valve or pump 914 or via wired communication. The wireless communication device may be any suitable type, including but not limited to an RFID device, Bluetooth device and a Zigbee device. The CPU 924 is able to actuate or deactuate the valve or pump 924 as needed. The sensors 920, 922 and the processing unit 924 may be powered remotely such as by an inductive coupling device in the outlet of the housing. The wireless communications devices 926 of the valve or pump 1014 and the valve or pump itself 914 may be powered by a hard wire electric connection to the system power supply (not shown).

As explained above, fluid is passed tangentially over the filter membrane. Filtrate passes through the membrane and becomes part of the filtrate stream. In some embodiments, there is no maintenance action 12 required by the TFF filter. However, in other embodiments, the processing unit in the TFF filter may continuously monitor the upstream and downstream pressure, via sensors 920, 922. Based on the difference between these values, the processing unit may control the valve or pump 914, thereby indirectly controlling the downstream pressure and the TMP.

At some point, the upstream pressure, or the TMP, may reach a level which cannot be rectified by adjusting the valve or pump 914. In this case, the filer may move to recovery mode 20, where a corrective action is performed. In one embodiment, the filter has one or more piezo electric devices, which vibrate when energized, located on or near the filter membrane. In this embodiment, the controller 924 actuates the piezo electric devices 930. These piezo electric devices are located on the filter element, preferably close or affixed to the membrane. When actuated, these devices 930 vibrate in response to electrical current. The resulting vibration causes the particulate that has accumulated on the membrane to break free and move in the tangential flow, thereby lowering the upstream pressure. Although piezo electric devices cause the desired vibration thereby loosening the accumulated material, other mechanical or electrical embodiments may be used. For instance, as proteins are known to be electrically polar as used in Gel Electrophoresis, a temporary electrical voltage potential could be used to temporarily draw off proteins from the membrane surface.

If this occurs, then the processing unit 924 returns to the normal operating mode 10. However, if the vibration or other method is unsuccessful in removing the particulate, the processing unit may attempt the recovery action one or more times. If after the predetermined number of attempts, the action is unable to remove the particulate, the processor 924 may move to the end of life mode 30. In this mode, the processing unit alerts the operator, as described above.

In an alternative arrangement, one might use a backflush of fluid through the membrane from the filtrate side to the feed side to dislodge the accumulated particulate from the feed side surface of the membrane. The filtrate pump 860 can be reversed and draw filtrate back through the membrane. Feed pump 850 may either be shut off or reduced in speed if desired or required to achieve the backflush. The backflushed filtrate then flows back through the retentate line to the feed tank. As another alternative, buffer solution could be fed from the filtrate side through the membrane to backflush it so that filtrate is not required to be filtered twice.

If this occurs, then the processing unit 924 returns to the normal operating mode 10. However, if the backflush is unsuccessful in removing the particulate, the processing unit may attempt the recovery action one or more times. If after the predetermined number of attempts, the action is unable to remove the particulate, the processor 924 may move to the end of life mode 30. In this mode, the processing unit alerts the operator, as described above.

In each of these situations, the present invention detects the issue and alerts the operator of the problem. This alert mechanism can be of various types. In some embodiments, a sensory alert, such as visual or auditory, is utilized. In these cases, a LED may illuminate or a device may sound to indicate a condition that must be attended to by the operator. In other embodiments, information concerning the error is transmitted wirelessly to a remote device, which receives the wireless transmission, and subsequently alerts the operator, such as through a graphic message on a video display unit.

The filter of the present invention is adapted to maintain the operating conditions of the filtering element, recover from temporary error conditions, and report uncorrectable errors to an operator.

The processing unit can also detect sudden changes in flow rate and/or pressure, which may indicate a transient error, such as material splashing. Based on this assumption, the processing unit can employ recovery techniques, such as elevated temperatures, to attempt to correct the problem.

Finally, in the event of a clogged filter, which cannot be rectified by the processing unit, an alert can be sent to an operator, signifying that the filtering element requires servicing.

The above examples show several embodiments of the present invention. In all embodiments, the filter element comprises a processing unit, capable of operating in three different modes, and at least one sensor. This sensor may be a pressure sensor, temperature sensor, flow sensor, a pH sensor, or any other suitable type. In addition, the processing unit has the ability to control at least one actuator, which is used during recovery mode. In some embodiments, the processing unit also controls at least one actuator during the maintenance action in normal mode. It should be noted that in some cases, such as Example 1, the processing unit, sensors and actuators are all contained within the filter. In other embodiments, such as Example 2, the actuators are located separate from the filter, but are controlled by the processing unit in the filter. Finally, in Example 3, one actuator is located on the filter, while a second actuator is located separate from the filter.

The terms and expressions which have been employed herein are used as terms of description and not of limitation, and there is no intention in the use of such terms and expressions of excluding any equivalents of the features shown and described (or portions thereof). It is also recognized that various modifications are possible within the scope of the claims. Other modifications, variations, and alternatives are also possible. Accordingly, the foregoing description is by way of example only and is not intended as limiting.

## Claims

1. An autonomous filtering device, comprising:
a. A filter element having a membrane through which said fluids can pass and a housing to support said membrane; and
b. At least one sensor located within said filter element adapted to monitor at least one parameter associated with said filtering device;
c. A mechanism to indicate an alert to an operator; and
d. A processing unit in communication with said sensor and said mechanism, and adapted to control an actuator, wherein said processing unit is adapted to operate in each of three modes, wherein a first mode is used during normal operation, a second mode is used to control said actuator, and a third mode is used to activate said alert mechanism.

2. The element of claim 1, wherein said actuator is selected from the group consisting of a piezo electric device, an electromotive force device, a heating element, a valve, and a pump.

3. The element of claim 1, wherein said processing unit transitions between said mode based on the output of said sensor.

4. The element of claim 3, wherein said processing unit transitions from said first mode to said second mode if said sensor output is outside an acceptable range.

5. The element of claim 4, wherein said processing element controls said actuator, said actuator adapted to affect said parameter monitored by said sensor.

6. The element of claim 5, wherein said processing unit transitions from said second mode to said first mode, if said sensor output reverts to an acceptable range.

7. The element of claim 5, wherein said processing unit transitions from said second mode to said third mode is said sensor output does not return to an acceptable range.

8. A method of providing status of a filter element, comprising the steps of:
a. supplying a filter element having a membrane through which said fluids can pass and a housing to support said membrane, a heating element located within said filter element adapted to heat said membrane and first and second temperature sensors located on either side of said membrane and said heating element, and a processing unit in communication with said sensors and said heating element;
b. monitoring the flow rate through said membrane based on the temperature difference between said first and second temperature sensor; and
c. alerting an operator if said flow rate decreases below a predetermined level, said decrease indicating that said membrane is clogged.

9. The method of claim 8, further comprising alerting an operator if said flow rate increase above a predetermined level, said increase indicative of a filter integrity problem.
